Europäisches Patentamt

European Patent Office

Office européen des brevets

(19)

(11)  **EP 1 653 744 A1**

(12)  **EUROPEAN PATENT APPLICATION**

(43) Date of publication:
03.05.2006  Bulletin 2006/18

(51) Int Cl.:
*H04N 7/26* *(2006.01)*

(21) Application number: 05010885.1

(22) Date of filing: 19.05.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **27.10.2004  US 975731**

(71) Applicant: **QUALCOMM INCORPORATED
San Diego, CA 92121-1714 (US)**

(72) Inventors:
• **Molloy, Stephen
Carlsbad,
California 92008 (US)**
• **Huang, Ling Feng
San Diego,
California 92126 (US)**

(74) Representative: **Emde, Eric
Wagner & Geyer,
Gewürzmühlstrasse 5
80538 München (DE)**

(54)  **Non-integer pixel sharing for video encoding**

(57)  This disclosure describes video encoding techniques and video encoding devices that implement such techniques. In one embodiment, this disclosure describes a video encoding device comprising a motion estimator that generates non-integer pixel values for motion estimation, the motion estimator including a filter that receives at least three inputs of integer pixel values. The video encoding device also comprises a memory that stores the non-integer pixel values generated by the motion estimator, and a motion compensator that uses the stored non-integer pixel values for motion compensation.

**EP 1 653 744 A1**

**Description**

**TECHNICAL FIELD**

This disclosure relates to digital video processing and, more particularly, encoding of video sequences.

**BACKGROUND**

Digital video capabilities can be incorporated into a wide range of devices, including digital televisions, digital direct broadcast systems, wireless communication devices, personal digital assistants (PDAs), laptop computers, desktop computers, digital cameras, digital recording devices, cellular or satellite radio telephones, and the like. Digital video devices can provide significant improvements over conventional analog video systems in creating, modifying, transmitting, storing, recording and playing full motion video sequences.

A number of different video encoding standards have been established for encoding digital video sequences. The Moving Picture Experts Group (MPEG), for example, has developed a number of standards including MPEG-1, MPEG-2 and MPEG-4. Other standards include the International Telecommunication Union (ITU) H.263 standard, Quick-Time™ technology developed by Apple Computer of Cupertino California, Video for Windows™ developed by Microsoft Corporation of Redmond, Washington, Indeo™ developed by Intel Corporation, RealVideo™ from RealNetworks, Inc. of Seattle, Washington, and Cinepak™ developed by SuperMac, Inc. New standards continue to emerge and evolve, including the ITU H.264 standard and a number of proprietary standards.

Many video encoding standards allow for improved transmission rates of video sequences by encoding data in a compressed fashion. Compression can reduce the overall amount of data that needs to be transmitted for effective transmission of video frames. Most video encoding standards, for example, utilize graphics and video compression techniques designed to facilitate video and image transmission over a narrower bandwidth than can be achieved without the compression.

The MPEG standards and the ITU H.263 and ITU H.264 standards, for example, support video encoding techniques that utilize similarities between successive video frames, referred to as temporal or inter-frame correlation, to provide inter-frame compression. The inter-frame compression techniques exploit data redundancy across frames by converting pixel-based representations of video frames to motion representations. In addition, some video encoding techniques may utilize similarities within frames, referred to as spatial or intra-frame correlation, to further compress the video frames.

In order to support compression, a digital video device typically includes an encoder for compressing digital video sequences, and a decoder for decompressing the digital video sequences. In many cases, the encoder and decoder form an integrated encoder/decoder (CODEC) that operates on blocks of pixels within frames that define the sequence of video images. In the MPEG-4 standard, for example, the encoder typically divides a video frame to be transmitted into "macroblocks," which comprise 16 by 16 pixel arrays. The ITU H.264 standard supports 16 by 16 video blocks, 16 by 8 video blocks, 8 by 16 video blocks, 8 by 8 video blocks, 8 by 4 video blocks, 4 by 8 video blocks and 4 by 4 video blocks.

For each video block in the video frame, an encoder searches similarly sized video blocks of one or more immediately preceding video frames (or subsequent frames) to identify the most similar video block, referred to as the "best prediction." The process of comparing a current video block to video blocks of other frames is generally referred to as motion estimation. Once a "best prediction" is identified for a video block, the encoder can encode the differences between the current video block and the best prediction. This process of encoding the differences between the current video block and the best prediction includes a process referred to as motion compensation. Motion compensation comprises a process of creating a difference block, indicative of the differences between the current video block to be encoded and the best prediction. Motion compensation usually refers to the act of fetching the best prediction block using a motion vector, and then subtracting the best prediction from an input block to generate a difference block.

After motion compensation has created the difference block, a series of additional encoding steps are typically performed to encode the difference block. These additional encoding steps may depend on the encoding standard being used. In MPEG4 compliant encoders, for example, the additional encoding steps may include an 8x8 discrete cosine transform, followed by scalar quantization, followed by a raster-to-zigzag reordering, followed by run-length encoding, followed by Huffman encoding.

An encoded difference block can be transmitted along with a motion vector that indicates which video block from the previous frame was used for the encoding. A decoder receives the motion vector and the encoded difference block, and decodes the received information to reconstruct the video sequences.

In many standards, half-pixel values are also generated during the motion estimation and motion compensation. In MPEG 4, for example, half-pixel values are generated as the average pixel values between two adjacent pixels. The half-pixels are used in candidate video blocks, and may form part of the best prediction identified during motion estimation. Relatively simple two-tap filters can be used to generate the half-pixel values, as they are needed in the motion estimation and motion compensation processes. The generation of non-integer pixel values can improve the resolution of inter-frame correlation, but generally complicates the encoding and decoding processes.

## SUMMARY

This disclosure describes video encoding techniques and video encoding devices that implement such techniques. The described video encoding techniques may be useful for a wide variety of encoding standards that allow for non-integer pixel values in motion estimation and motion compensation. In particular, video encoding standards such as the ITU H.264 standard, which uses half-pixel and quarter-pixel values in motion estimation and motion compensation may specifically benefit from the techniques described herein. More generally, any standard that specifies a three-tap filter or greater in the generation of non-integer pixel values in a given dimension, e.g., vertical or horizontal, may benefit from the techniques described herein. The techniques are particularly useful for portable devices, where processing overhead can significantly influence device size and battery consumption.

In one embodiment, this disclosure describes a video encoding device comprising a motion estimator that generates non-integer pixel values for motion estimation, the motion estimator including a filter that receives at least three inputs of integer pixel values. The device also includes a memory that stores the non-integer pixel values generated by the motion estimator, and a motion compensator that uses the stored non-integer pixel values for motion compensation. For compliance with the ITU H.264 standard, for example, the motion estimator may generate half-pixel values using a six-tap filter, and store the half-pixel values for use in both motion estimation and motion compensation. The motion estimator may also generate quarter-pixel values using a two-tap filter, and use the quarter-pixel value in the motion estimation, without storing the quarter-pixel values for motion compensation. In that case, the motion compensator uses the stored half-pixel values that were generated by the motion estimator, but re-generates the quarter-pixel values using another two-tap filter. In some cases, separate filters are implemented for both horizontal and vertical interpolation, but the output of any large filters (of three taps or greater) is reused for motion estimation and motion compensation. In other cases, the same large filter may be used for both horizontal and vertical interpolation. In those cases, however, the clock speed of the encoding device may need to be increased.

These and other techniques described herein may be implemented in a digital video device in hardware, software, firmware, or any combination thereof. If implemented in software, the techniques may be directed to a computer readable medium comprising program code, that when executed, performs one or more of the encoding techniques described herein. Additional details of various embodiments are set forth in the accompanying drawings and the description below. Other features, objects and advantages will become apparent from the description and drawings, and from the claims.

## BRIEF DESCRIPTION OF DRAWINGS

FIG. 1 is a block diagram illustrating an example system in which a source digital video device transmits an encoded sequence of video data to a receive digital video device.

FIG 2 is an exemplary block diagram of a device that includes a video encoder.

FIG 3 is another exemplary block diagram of a device that includes a video encoder.

FIG 4 is a diagram of an exemplary search space formed around a location corresponding to a four-pixel by four-pixel video block.

FIG 5 is a diagram of an exemplary search space including columns of half-pixel values.

FIG 6 is a diagram of an exemplary search space including rows and columns of half-pixel values.

FIG 7 is a diagram of a search space and various pixels that can be generated from the search space in order to support decoding.

FIG. 8 is a flow diagram illustrating a video encoding technique.

## DETAILED DESCRIPTION

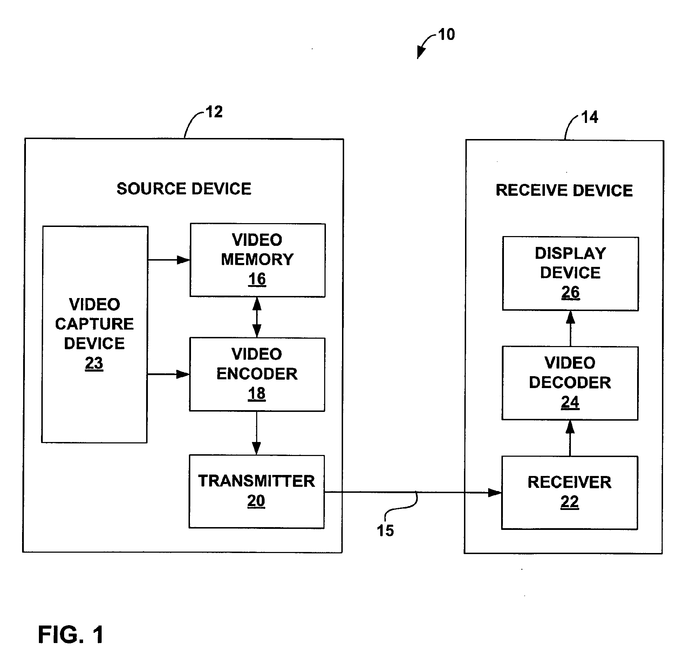

FIG. 1 is a block diagram illustrating an example system 10 in which a source device 12 transmits an encoded sequence of video data to a receive device 14 via a communication link 15. Source device 12 and receive device 14 are both digital video devices. In particular, source device 12 encodes video data consistent with a video standard such as the ITU H.264 video encoding standard, which allows for non-integer pixel values in motion estimation and motion compensation. System 10 implements techniques in which non-integer pixel values are generated, stored, and used for both motion estimation and motion compensation. This eliminates the need for large filters in both the motion estimator and the motion compensator to generate the same non-integer pixel values. The techniques described herein may be particularly useful with any published or proprietary standard that specifies a three-tap filter or greater in the generation of non-integer pixel values in a given dimension, such as for vertical or horizontal interpolation. In accordance with this disclosure, however, any non-integer pixel values generated by smaller filters (two-tap filters) may be generated when needed, without storing these values for later use.

Communication link 15 may comprise a wireless link, a physical transmission line, fiber optics, a packet based network such as a local area network, wide-area network, or global network such as the Internet, a public switched telephone network (PSTN), or any other communication link capable of transferring data. Thus, communication link 15 represents any suitable communication medium, or possibly a collection of different networks and links, for transmitting video data from source device 12 to receive device 14.

Source device 12 may be any digital video device capable of encoding and transmitting video data. Source device 12 may include a video memory 16 to store digital video sequences, a video encoder 18 to encode the sequences, and a transmitter 20 to transmit the encoded sequences over communication link 15 to source device 14. Video encoder 18 may include, for example, various hardware, software or firmware, or one or more digital signal processors (DSP) that execute programmable software modules to control the video encoding techniques, as described herein. Associated memory and logic circuitry may be provided to support the DSP in controlling the video encoding techniques. As will be described, video encoder 18 may be configured to generate non-integer pixel values, and may use the generated non-integer pixel values for both motion estimation and motion compensation.

Source device 12 may also include a video capture device 23, such as a video camera, to capture video sequences and store the captured sequences in memory 16. In particular, video capture device 23 may include a charge coupled device (CCD), a charge injection device, an array of photodiodes, a complementary metal oxide semiconductor (CMOS) device, or any other photosensitive device capable of capturing video images or digital video sequences.

As further examples, video capture device 23 may be a video converter that converts analog video data to digital video data, e.g., from a television, video cassette recorder, camcorder, or another video device. In some embodiments, source device 12 may be configured to transmit real-time video sequences over communication link 15. In that case, receive device 14 may receive the real-time video sequences and display the video sequences to a user. Alternatively, source device 12 may capture and encode video sequences that are sent to receive device 14 as video data files, i.e., not in real-time. Thus, source device 12 and receive device 14 may support applications such as video clip playback, video mail, or video conferencing, e.g., in a mobile wireless network. Devices 12 and 14 may include various other elements that are not specifically illustrated in FIG. 1.

Receive device 14 may take the form of any digital video device capable of receiving and decoding video data. For example, receive device 14 may include a receiver 22 to receive encoded digital video sequences from transmitter 20, e.g., via intermediate links, routers, other network equipment, and like. Receive device 14 also may include a video decoder 24 for decoding the sequences, and a display device 26 to display the sequences to a user. In some embodiments, however, receive device 14 may not include an integrated display device 14. In such cases, receive device 14 may serve as a receiver that decodes the received video data to drive a discrete display device, e.g., a television or monitor.

Example devices for source device 12 and receive device 14 include servers located on a computer network, workstations or other desktop computing devices, and mobile computing devices such as laptop computers or personal digital assistants (PDAs). Other examples include digital television broadcasting satellites and receiving devices such as digital televisions, digital cameras, digital video cameras or other digital recording devices, digital video telephones such as mobile telephones having video capabilities, direct two-way communication devices with video capabilities other wireless video devices, and the like.

In some cases, source device 12 and receive device 14 each include an encoder/decoder (CODEC) (not shown) for encoding and decoding digital video data. In particular, both source device 12 and receive device 14 may include transmitters and receivers as well as memory and displays. Many of the encoding techniques outlined below are described in the context of a digital video device that includes an encoder. It is understood, however, that the encoder may form part of a CODEC. In that case, the CODEC may be implemented within hardware, software, firmware, a DSP, a microprocessor, an application specific integrated circuit (ASIC), a field programmable gate array (FPGA), discrete hardware components, or various combinations thereof. Moreover, the encoding techniques described herein may allow for various digital filters or hardware components to be used for both encoding and decoding applications.

Video encoder 18 within source device 12 operates on blocks of pixels within a sequence of video frames in order to encode the video data. For example, video encoder 18 may execute motion estimation and motion compensation techniques in which a video frame to be transmitted is divided into blocks of pixels (referred to as video blocks). The video blocks, for purposes of illustration, may comprise any size of blocks, and may vary within a given video sequence. As an example, the ITU H.264 standard supports 16 by 16 video blocks, 16 by 8 video blocks, 8 by 16 video blocks, 8 by 8 video blocks, 8 by 4 video blocks, 4 by 8 video blocks and 4 by 4 video blocks. Smaller video blocks can provide better resolution in the encoding, and may be specifically used for locations of video frame that include higher levels of detail. Moreover, as described below, video encoder 18 may be designed to operate on 4 by 4 video blocks in a pipelined manner, and reconstruct larger video blocks from the 4 by 4 video blocks, as needed.

Each pixel in a video block may be represented by an n-bit value, e.g., 8 bits, that defines visual characteristics of the pixel such as the color and intensity in values of chrominance and luminance. However, motion estimation is often performed only on the luminance component because human vision is more sensitive to changes in luminance than chromaticity Accordingly, for purposes of motion estimation, the entire n-bit value may quantify luminance for a given pixel. The principles of this disclosure, however, are not limited to the format of the pixels, and may be extended for use with simpler fewer-bit pixel formats or more complex larger-bit pixel formats.

For each video block in the video frame, video encoder 18 of source device 12 performs motion estimation by searching video blocks stored in memory 16 for one or more preceding video frames already transmitted (or a subsequent video frames) to identify a similar video block. Upon determining a "best prediction" from the preceding or subsequent video frame, video encoder 18 performs motion compensation to create a difference block indicative of the differences between the current video block to be encoded and the best prediction. Motion compensation usually refers to the act of fetching the best prediction block using a motion vector, and then subtracting the best prediction from an input block to generate a difference block.

After the motion compensation process has created the difference block, a series of additional encoding steps are typically performed to encode the difference block. These additional encoding steps may depend on the encoding standard being used. In MPEG4 compliant encoders, for example, the additional encoding steps may include an 8x8 discrete cosine transform, followed by scalar quantization, followed by a raster-to-zigzag reordering, followed by run-length encoding, followed by Huffman encoding.

Once encoded, the encoded difference block can be transmitted along with a motion vector that identifies the video block from the previous frame (or subsequent frame) that was used for encoding. In this manner, instead of encoding each frame as an independent picture, video encoder 18 encodes the difference between adjacent frames. Such techniques can significantly reduce the amount of data that needed to accurately represent each frame of a video sequence.

The motion vector may define a pixel location relative to the upper-left-hand corner of the video block being encoded, although other formats for motion vectors could be used. In any case, by encoding video blocks using motion vectors, the required bandwidth for transmission of streams of video data can be significantly reduced.

In some cases, video encoder 18 can support intra frame encoding, in addition to intra-frame encoding. Intra-frame encoding utilizes similarities within frames, referred to as spatial or intra-frame correlation, to further compress the video frames. Intra-frame compression is typically based upon texture encoding for compressing still images, such as discrete cosine transform (DCT) encoding. Intra-frame compression is often used in conjunction with inter-frame compression, but may also be used as an alterative in some implementations.

Receiver 22 of receive device 14 may receive the encoded video data in the form of motion vectors and encoded difference blocks indicative of encoded differences between the video block being encoded and the best prediction used in motion estimation. Decoder 24 performs video decoding in order to generate video sequences for display to a user via display device 26. The decoder 24 of receive device 14 may also be implemented as an encoder/decoder (CODEC). In that case, both source device 12 and receive device 14 may be capable of encoding, transmitting, receiving and decoding digital video sequences.

In accordance with this disclosure, non-integer pixel values that are generated from three or more input pixel values during video encoding in a given dimension (horizontal or vertical) can be stored in a local memory of video encoder 18 and then used for both motion estimation and motion compensation. The stored non-integer pixel values may be separately buffered, or allocated to any specific memory locations, as long as the non-integer pixel values can be located and identified, when needed. In contrast, non-integer pixel values that are generated from two input pixel values in a given dimension need not be stored for any significant amount of time, but can be generally calculated as needed for the motion estimation or the motion compensation.

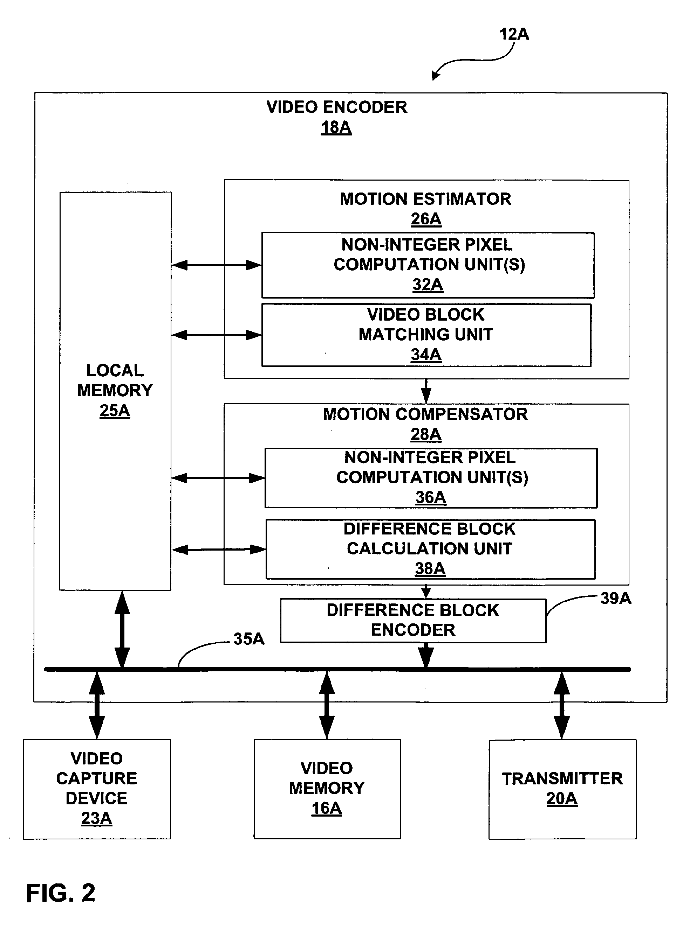

FIG 2 is an exemplary block diagram of a device 12A that includes a video encoder 18A. Device 12A of FIG 2 may correspond to device 12 of FIG 1. As shown in FIG 2, device 12A includes a video encoder 18A to encode video sequences, and a video memory 16A to store the video sequences before and after encoding. Device 12A may also include a transmitter 20A to transmit the encoded sequences to another device, and possibly a video capture device 23A, such as a video camera, to capture video sequences and store the captured sequences in memory 16A. The various elements of device 12A may be communicatively coupled via a communication bus 35A. Various other elements, such as intra-frame encoder elements, various filters, or other elements may also be included in device 12A, but are not specifically illustrated for simplicity.

Video memory 16A typically comprises a relatively large memory space. Video memory 16A, for example, may comprise dynamic random access memory (DRAM), or FLASH memory. In other examples, video memory 16A may comprise a non-volatile memory or any other data storage device.

Video encoder 18A includes a local memory 25A, which may comprise a smaller and faster memory space relative to video memory 16A. By way of example, local memory 25A may comprise synchronous random access memory (SRAM). Local memory 25A may also comprise "on-chip" memory integrated with the other components of video encoder 18A to provide for very fast access to data during the processor-intensive encoding process. During the encoding of a given video frame, the current video block to be encoded may be loaded from video memory 16A to local memory 25A.

A search space used in locating the best prediction may also be loaded from video memory 16A to local memory 25A. The search space may comprise a subset of pixels of one or more of the preceding video frames (or subsequent frames). The chosen subset may be pre-identified as a likely location for identification of a best prediction that closely matches the current video block to be encoded.

In many video standards, fractional pixels or non-integer pixels are also considered during the encoding process. For example, in MPEG-4, half-pixel values are calculated as the average between two adjacent pixels. In MPEG-4 compliant encoders, the average between two adjacent pixels can be easily generated for a given dimension, as needed, using a relatively simple digital filter that has two inputs and one output, commonly referred to as a two-tap digital filter.

By way of example, in the simple MPEG2 or MPEG4 case, if interpolation is performed both horizontally and vertically, then two-tap digital filters can be used for each dimension. Alternatively, interpolation in two-dimensions could be done as a single 4-tap averaging filter. When filters specify more than two inputs in a given dimension, or more than five inputs for two-dimensional interpolation, the techniques described herein become very useful.

The tap weights of the digital filter are specified by the encoding standard. In order to support MPEG-4, motion estimator 26A and motion compensator 28A may include similar two-tap digital filters, which allow the half-pixel values to be generated for horizontal and vertical dimensions at any time using the integer pixel values of the search space loaded in local memory 25A.

For some newer standards, however, the generation of non-integer pixels is more complex. For example, many newer standards specify the generation of half-pixel values in a given dimension based on the weighted sum of more that two pixels. As one specific example, the ITU H.264 standard specifies calculation of half-pixel values in both the horizontal and vertical dimensions as the weighted average between six pixels. For fractional horizontal pixels, the three pixels on the left of the half-pixel value are weighted similarly to the three pixels on the right of the half-pixel value. For fractional vertical pixels, the three pixels on the top of the half-pixel value are weighted similarly to the three pixels on the bottom of the half-pixel value. In both cases, a filter having six inputs and one output (a six-tap digital filter) is generally needed to generate the half-pixel values.

Moreover, the ITU H.264 standard also specifies the generation of quarter-pixel values, which are calculated as the average between an integer pixel and an adjacent half-pixel. Thus, generation of quarter-pixel values typically involves the use of a six-tap filter to generate a half-pixel value, followed by the use of a two-tap filter to generate the quarter-pixel value. Many proprietary standards also use other weighted averaging rules for non-integer pixel generation, which can add significant complexity to the generation of non-integer pixel values.

In accordance with this disclosure, non-integer pixel values that are generated from three or more input pixel values in a given dimension can be stored in local memory 25A as part of the search space. The stored non-integer pixel values may be separately buffered, or allocated to any specific memory locations, as long as the non-integer pixel values can be located and identified, when needed. In contrast, non-integer pixel values that are generated from two input pixel values need not be stored for any significant amount of time, but can be generally calculated as needed.

This disclosure recognizes the trade-off between the need for additional memory space in local memory 25A to store any non-integer pixel values for significant amounts of time, and the hardware or processing power needed to filter inputs and generate the non-integer pixel values. Two-tap filters are very simple to implement in one dimension, and therefore, two-tap filters can be used in many locations of video encoder to generate non-integer pixel values from two inputs, when needed. However, filters having greater than three inputs for one dimension, and specifically six-tap filters used for compliance with the ITU H.264 standard are more complex. When these larger filters are needed, it is more advantageous to implement a single filter that receives three or more inputs, and then store or buffer the output of the large filter in local memory 25A for reuse in the encoding process, when needed.

For example, video encoder 18A includes a motion estimator 26A and a motion compensator 28A, which respectively perform motion estimation and motion compensation in the video encoding process. As shown in FIG 2, both motion estimator 26A and motion compensator 28A include one or more non-integer pixel computation unit(s) 32A and 36A, respectively. Non-integer pixel computation unit(s) 32A and 36A may comprise one or more digital filters. However, while two-tap digital filters may be duplicated in both of non-integer pixel computation unit(s) 32A and 36A, any N-tap filters (where N represents an integer greater than or equal to 3) may be implemented in only one of units 32A and 36A. The output of a filter having more than three inputs can be stored in local memory 25A for later use and re-use in the encoding process.

In some cases, separate filters are implemented for both horizontal and vertical interpolation, but the output of any large filters (of three taps or greater) can be reused for motion estimation and motion compensation. In other cases, the same large filter may be used for both horizontal and vertical interpolation and the output of the large filter can be stored for use in both motion estimation and motion compensation. In those cases, however, the clock speed may need to be increased since a single filter is used for both horizontal and vertical interpolation, which may increase power consumption.

Local memory 25A is loaded with a current video block to be encoded and a search space, which comprises some or all of one or more different video frames used in inter-frame encoding. Motion estimator 26A compares the current video block to various video blocks in the search space in order to identify a best prediction. In some cases, however, an adequate match for the encoding may be identified more quickly, without specifically checking every possible candidate, and in that case, the adequate match may not actually be the "best" prediction, albeit adequate for effective video encoding.

Motion estimator 26A supports encoding schemes that use non-integer pixel values. In particular, non-integer pixel computation unit 32A may generate non-integer pixel values that expand the search space to fractional or non-integer pixel values. Both horizontal non-integer pixel values and vertical non-integer pixel values may be generated. Any non-integer pixel values generated from two inputs may be used and then discarded or overwritten in local memory 25A, as these non-integer pixel values generated from two inputs can be easily re-generated, as needed. However, any non-integer pixel values generated from three or more inputs may be used and maintained in local memory 25A for subsequent use in the encoding process, as these non-integer pixel values generated from three or more inputs are more complicated to generate and re-generate.

Video block matching unit 34A performs the comparisons between the current video block to be encoded and the candidate video blocks in the search space of memory 25A, including any candidate video blocks that include non-integer pixel values generated by non-integer pixel computation units(s) 32A. For example, video block matching unit 34A may comprise a difference processor, or a software routine that performs difference calculations in order to identify a best prediction (or simply an adequate prediction).

By way of example, video block matching unit 34A may perform SAD techniques (sum of absolute difference techniques), SSD techniques (sum of squared difference techniques), or other comparison techniques, if desired. The SAD techniques involve the tasks of performing absolute difference computations between pixel values of the current video block to be encoded, with pixel values of the candidate video block to which the current video block is being compared. The results of these absolute difference computations are summed, i.e., accumulated, in order to define a difference value indicative of the difference between the current video block and the candidate video block. For an 8 by 8 pixel image block, 64 differences may be computed and summed, and for a 16 by 16 pixel macroblock, 256 differences may be computed and summed. The overall summation of all of the computations can define the difference value for the candidate video block.

A lower difference value generally indicates that a candidate video block is a better match, and thus a better candidate for use in motion estimation encoding than other candidate video blocks yielding higher difference values, i.e. increased distortion. In some cases, computations may be terminated when an accumulated difference value exceeds a defined threshold, or when an adequate match is identified early, even if other candidate video blocks have not yet been considered.

The SSD techniques also involve the task of performing difference computations between pixel values of the current video block to be encoded with pixel values of the candidate video block. However, in the SSD techniques, the results of difference computations are squared, and then the squared values are summed, i.e., accumulated, in order to define a difference value indicative of the difference between the current video block and the candidate video block to which the current macro block is being compared. Alternatively, video block matching unit 34A may use other comparison techniques such as a Mean Square Error (MSE), a Normalized Cross Correlation Function (NCCF), or another suitable comparison algorithm.

Ultimately, video block matching unit 34A can identify a "best prediction," which is the candidate video block that most closely matches the video block to be encoded. However, it is understood that, in many cases, an adequate match may be located before the best prediction, and in those cases, the adequate match may be used for the encoding. In the following description, reference is made to the "best prediction" identified by video block matching unit 34A, but it is understood that this disclosure is not limited in that respect, and any adequate match may be used and can possibly be identified more quickly than the best prediction.

In some embodiments, video block matching unit 34A may be implemented in a pipelined manner. For example, video block matching unit 34A may comprise a processing pipeline that simultaneously handles more than one video block. Moreover, in some cases, the processing pipeline may be designed to operate on 4-pixel by 4-pixel video blocks, even if the size of the video block to be encoded is larger than 4-pixel by 4-pixel video blocks. In that case, the difference computations for an adjacent set of 4-pixel by 4-pixel candidate video blocks may be summed to represent the difference computations for a larger video block, e.g., a 4-pixel by 8-pixel video block comprising two 4-pixel by 4-pixel candidates, an 8-pixel by 4-pixel video block comprising two 4-pixel by 4-pixel candidates, an 8-pixel by 8-pixel video block comprising four 4-pixel by 4-pixel candidates, an 8-pixel by 16-pixel video block comprising eight 4-pixel by 4-pixel candidates, a 16-pixel by 8-pixel video block comprising eight 4-pixel by 4-pixel candidates, a 16-pixel by 16-pixel video block comprising sixteen 4-pixel by 4-pixel candidates, and so fourth.

In any case, once a best prediction is identified by video matching unit 34A for a video block, motion compensator 28A creates a difference block indicative of the differences between the current video block and the best prediction. Video block encoder 39A may further encode the difference block to compress the difference block, and the encoded difference block can forwarded for transmission to another device, along a motion vector that indicates which candidate video block from the search space was used for the encoding. For simplicity, the additional components used to perform encoding after motion compensation are generalized as difference block encoder 39A, as the specific components would vary depending on the specific standard being supported. In other words, difference block encoder 39A may perform one or more conventional encoding techniques on the difference block, which is generated as described above.

Motion compensator 28A includes non-integer pixel computation unit(s) 36A for generating any non-integer pixels of the best prediction. As outlined above, however, non-integer pixel computation unit(s) 36A of motion compensator 28A only include two-tap digital filters for a given dimension, and generally do not include larger digital filters, because the output of any larger digital filters of non-integer pixel computation unit(s) 32A of motion estimator 26A are stored in local memory 25A for use in both motion estimation and motion compensation. Accordingly, the need to implement digital filters that require three or more inputs for a given dimension in motion compensator 28A can be avoided.

Difference block calculation unit 38A generates a difference block, which generally represents the differences between the current video block and the best prediction. The difference block may also be referred to as a "prediction matrix" or as a "residual." The difference block is generally a matrix of values that represent the difference in pixel values of the best prediction and the current video block. In other words:

$$\textit{Difference Block = Pixel values of best prediction - pixel values of Current Video Block}$$

Video block encoder 39 encodes the difference block to compress the difference block, and the encoded video blocks are then forwarded to transmitter 20A for transmission to another device. In some cases, encoded video blocks may be temporarily stored in video memory 16A, where the encoded video blocks are accumulated and then sent by transmitter 20A as a stream of video frames. In any case, the encoded video blocks may take the form of encoded difference blocks and motion vectors. The difference block represents the difference in pixel values of the best prediction and the current video block. The motion vector identifies the location of the best prediction, either within the frame or within fractional pixels generated from the frame. In different video standards there are different ways to identify which frame the motion vector applies to. For example, in H.264 utilizes a reference picture index, and in MPEG4 or MPEG2 this information is carried in the macroblock header information.

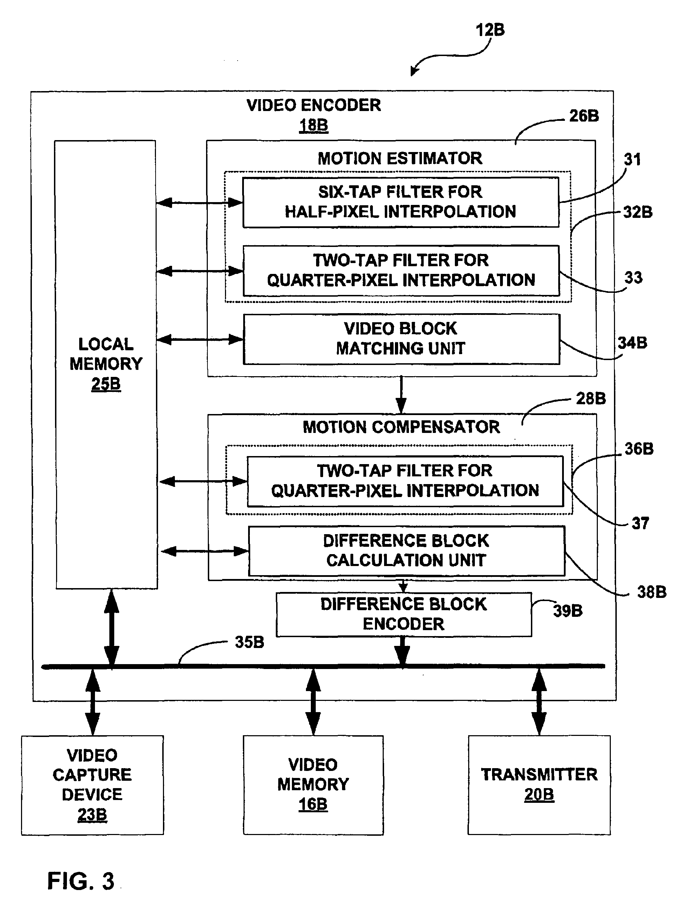

FIG 3 is another exemplary block diagram of a device 12B that includes a video encoder 18B. Device 12B of FIG 3 may correspond to device 12 of FIG 1, and is similar to device 12A of FIG 2. Device 12B of FIG 3 represents a more specific embodiment of device 12A illustrated in FIG 2. Device 12B, for example, may be compliant with the ITU H.264 video encoding standard.

As shown in FIG 3, Device 12B includes a video encoder 18B to encode video sequences, and a video memory 16B to store the video sequences before and after encoding. Device 12B may also include a transmitter 20B to transmit the encoded sequences to another device, and possibly a video capture device 23B, such as a video camera, to capture video sequences and store the captured sequences in memory 16B. The various elements of device 12B may be communicatively coupled via a communication bus 35B. Various other elements, such as intra-frame encoder elements, various filters, or other elements may also be included in device 12B, but are not specifically illustrated for simplicity

Video memory 16B typically comprises a relatively large memory space. Video memory 16B, for example, may comprise DRAM, FLASH memory, possibly a non-volatile memory, or any other data storage device.

Video encoder 18B includes a local memory 25B, which may comprise a smaller and faster memory space relative to video memory 16B. By way of example, local memory 25B may comprise synchronous random access memory (SRAM). Local memory 25B may also comprise "on-chip" memory integrated with the other components of video encoder 18B to provide fast access during the processor-intensive encoding process. During the encoding of a given video frame, the current video block to be encoded may be loaded form video memory 16B to local memory 25B.

Motion estimator 26B compares the current video block to various video blocks in the search space in order to identify a best prediction. Motion estimator 26B supports the ITU H.264 encoding schemes that use half-pixel values and quarter-pixel values. In particular, non-integer pixel computation unit 32B may include a six-tap filter 31 for half-pixel interpolation, and a two-tap filter 33 for quarter-pixel interpolation. Both horizontal half- and quarter-pixel values and vertical half- and quarter-pixel values may be generated.

The half-pixel values are generated by six-tap filter 31 as the weighted average of six successive pixels, according to the ITU H.264 video encoding standard. The quarter-pixel values are generated by two-tap filter 33 as the average of an integer pixel value and an adjacent half-pixel value. In other words, the tap weights of the filters may be specified by the ITU H.264 video encoding standard, although this disclosure is not limited in that respect.

In some cases, separate six-tap filters are implemented in motion estimator 26B for both horizontal and vertical interpolation, and the output of both six-tap filter can be used in motion estimation and motion compensation. In other cases, the same six-tap filter may be used for both horizontal and vertical interpolation. In the later case, however, the clock speed may need to be increased, which will increase power consumption. Accordingly, it may be more desirable to implement two six-tap digital filters for separate horizontal and vertical interpolation in motion estimation, and then reuse the output of both six-tap digital filters for horizontal and vertical interpolation in motion compensation. Regardless of whether motion estimator 26B implements two six-tap filters horizontal and vertical half-pixel interpolation or a single six-tap filter is used for both the horizontal and vertical half-pixel interpolation, a single two-tap digital filter may be implemented in each of motion estimator 26B and motion compensator 28B for quarter-pixel interpolation. However, additional two-tap filters might also be included to increase processing speed.

In any case, in accordance with this disclosure, the half-pixel output of six-tap filter 31 is used for both motion estimation and motion compensation. In other words, the half-pixel output of six-tap filter 31 is used for motion estimation and then stored in memory 25B for subsequent use in motion compensation. In contrast, the quarter-pixel output of two-tap filter 33 is used only for motion estimation, and is then discarded or overwritten in memory 25B.

Video block matching unit 34B performs the comparisons between the current video block to be encoded and the candidate video blocks in the search space of memory 25B, including any candidate video blocks that include quarter- or half-pixel values generated by non-integer pixel computation units 32B. For example, video block matching unit 34B may comprise a difference processor, or a software routine that performs difference calculations in order to identify a best prediction (or simply an adequate prediction). By way of example, video block matching unit 34A may perform SAD techniques, SSD techniques, or other comparison techniques such as a Mean Square Error (MSE), a Normalized Cross Correlation Function (NCCF), or another suitable comparison algorithm.

Ultimately, video block matching unit 34B can identify a "best prediction," which is the candidate video block that most closely matches the video block to be encoded. In some embodiments, video block matching unit 34B may be implemented in a pipelined manner. For example, video block matching unit 34B may comprise a processing pipeline that simultaneously handles more than one video block. Moreover, in some cases, the processing pipeline may be designed to operate on 4-pixel by 4-pixel video blocks, even if the size of the video block to be encoded is larger than 4-pixel by 4-pixel video blocks. In the pipelined embodiment, memory allocated to quarter-pixel storage may be overwritten once pixel are considered in the pipeline, which can reduce the amount of memory needed. Of course, half-pixel values are stored for subsequent use, as outlined herein.

Once a best prediction is identified by video matching unit 34B for a video block, motion compensator 28B can generate a difference block indicative of the differences between the current video block and the best prediction. Motion compensator 28B can then forward a difference block to difference block encoder 39B, which performs various additional encoding supported by the ITU H.264 encoding standard. Difference block encoder 39B forwards encoded difference blocks to transmitter 20B via bus 35B for transmission to another device, along a motion vector that indicates which candidate video block used for the encoding.

Motion compensator 28B includes non-integer pixel computation unit 36B for generating any non-integer pixels of the best prediction that are not already stored in local memory 25B. Non-integer pixel computation unit 36B of motion compensator 28B only includes a two-tap digital filter 37 for generating quarter-pixel values, and generally does not include a six-tap digital filter for generating half-pixel values, because the half-pixel output of six-tap digital filter 31 motion estimator 26B is stored in local memory 25B for use in both motion estimation and motion compensation. Accordingly, the need to implement a six-tap digital filter in motion compensator 28B can be avoided. Again, two-tap digital filters can be implemented very easily without requiring significant chip circuit area. Six-tap digital filters, in contrast, are much more complicated. Accordingly, the additional memory space required to buffer the half-pixel output of six-tap digital filter 31 for a significant amount of time during the encoding process of a given video block is worthwhile because it can eliminate the need for an additional six-tap digital filter.

Difference block calculation unit 38B generates a difference block, which generally represents the differences between the current video block and the best prediction. Again, the difference block is typically calculated as follows:

*Difference Block = Pixel values of best prediction - pixel values of Current Video Block*

Motion compensator 28B forwards difference blocks to difference block encoder 39B, which encodes and compresses the difference blocks and sends the encoded difference blocks to transmitter 20B for transmission to another device. The transmitted information may take the form of an encoded difference block and a motion vector. The difference block represents the difference in pixel values of the best prediction and the current video block. The motion vector identifies the location of the best prediction, either within the frame or within fractional pixels generated from the frame.

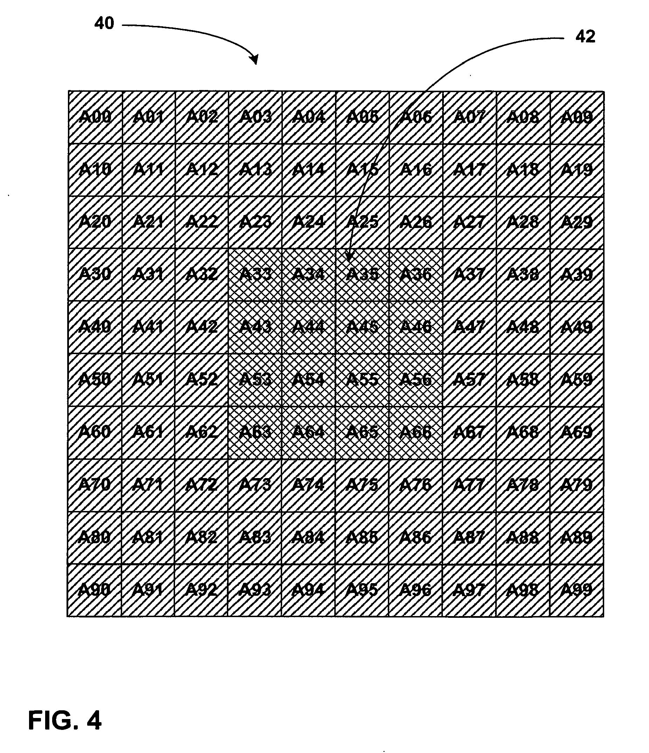

FIG 4 is a diagram of an exemplary search space 40 formed around a location corresponding to a four-pixel by four-pixel video block. In particular, search space 40 may comprise pixels of a proceeding or subsequent video frame. The current video block to be encoded may comprise a four-pixel by four-pixel video block of the current frame that corresponds to the location of the center-most pixels 42 of search space 40.

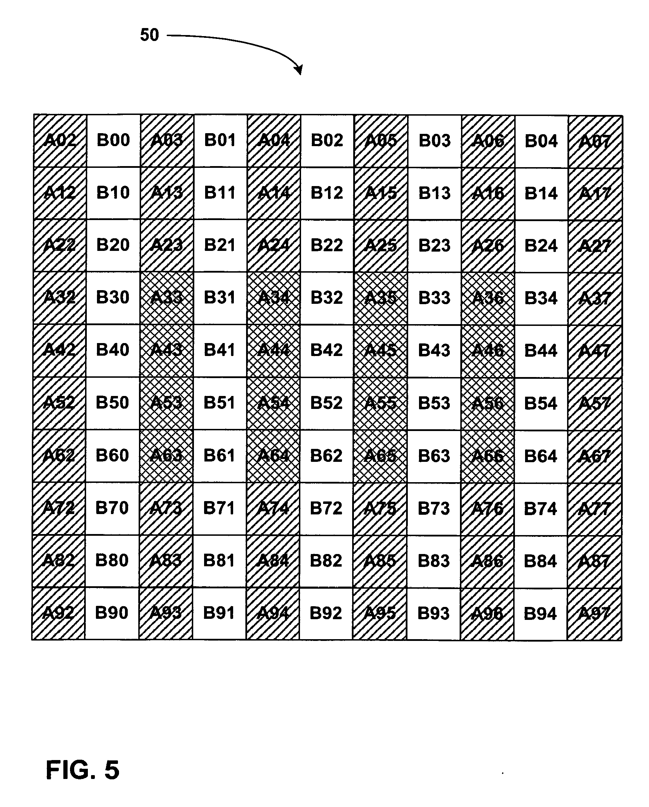

FIG 5 is a diagram of an exemplary search space 50 including columns of half-pixel values. The pixel values labeled "Bxx" correspond to the horizontal half-pixel values, and may be generated by a six-tap digital filter, as described herein. For example, pixel B00 may comprise the weighted average of pixels A00-A05 (FIG. 4). The tap- weights of the filter can define the weighting given to the different integer pixels, and may be specified by the standard being supported. The horizontal half-pixel values labeled "Bxx" may be stored in a local memory, as described herein, and re-used for both motion estimation and motion compensation. The actual storage scheme may vary in different implementations. In one example, a horizontal buffer is maintained in the local memory to specifically store horizontal half-pixel values, i.e., those labeled "Bxx."

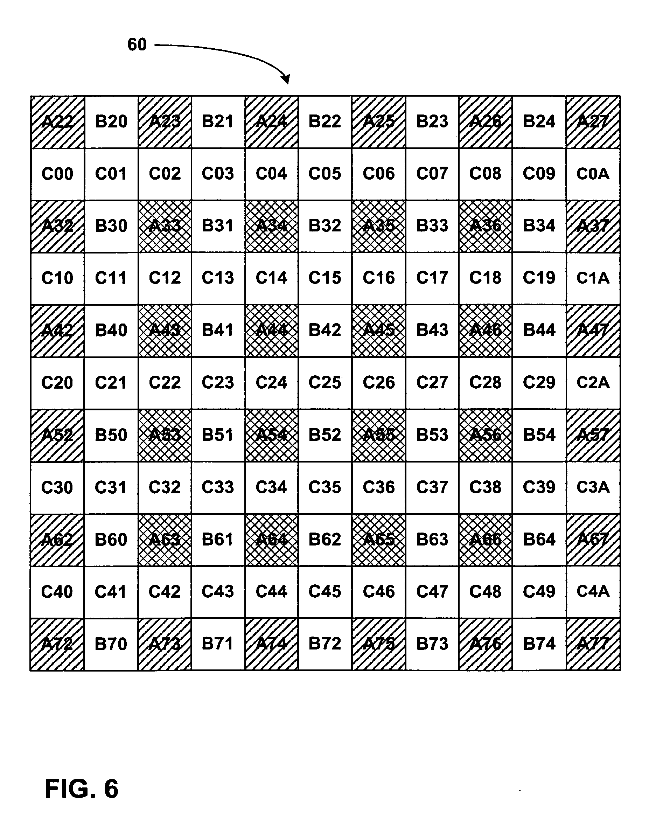

FIG 6 is another diagram of an exemplary search space 60 including rows and columns of half-pixel values. The pixel values labeled "Cxx" correspond to the vertical half-pixel values, and may be generated by the six-tap digital filter of a motion estimator, as described herein. For example, pixel C00 may comprise the weighted average of pixels A02-A52 (FIG 5), and pixel C01 may comprise the weighted average of pixels B00-B05 (FIG 5). The vertical half-pixel values labeled "Cxx" may be stored in a local memory, as described herein, and re-used for both motion estimation and motion compensation. However, the storage scheme may vary in different implementations. In one example, a vertical buffer is maintained in the local memory to specifically store vertical half-pixel values, i.e., those labeled "Cxx."

An additional buffer may be allocated for quarter-pixel values, but this buffer <u>may</u> be more limited in size. Quarter-pixel values can be stored in the quarter-pixel buffer, but then overwritten with other quarter-pixel values, after being considered. This disclosure recognizes that two-tap digital filters are less costly, from a chip-implementation standpoint, than the additional memory space that would otherwise be needed to store every generated quarter-pixel value for the entire encoding process of a given video block.

In addition, the same hardware may be used for both encoding and decoding. The decoding scheme is less intensive and generally requires the generation of pixel values, as needed. In accordance with this disclosure, the same digital filters used in the motion estimator and motion compensator may also be used in decoding to generate any non-integer pixel values.

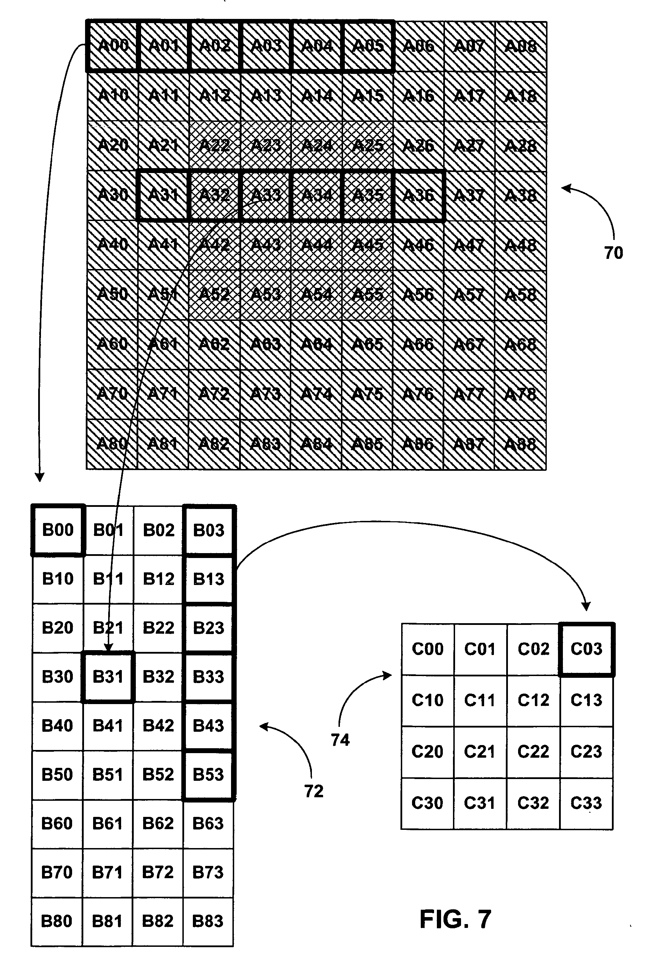

FIG 7 is a diagram of search space 70 that may be used to decode a four-pixel by four-pixel video block. In that case, if any horizontal or vertical pixel values need to be generated based on search space 70, the six-tap digital filter of the motion estimator may be used. A set of pixels 72 defines all of the horizontal pixel values that may be generated from search space 70 when a six-tap digital filter is used in compliance with the ITU H.264 standard. As shown, pixel B00 comprises the weighted sum of pixels A00-A05, and pixel B31 comprises the weighted sum of pixels A31-A36. Vertical half-pixel values corresponding to the weighted sum of integer pixels can be generated in a similar manner, but are not specifically illustrated for simplicity.

Also, additional vertical half-pixel values may be generated from set of pixels 72 to define another set of pixels 74. For example, pixel C03 may comprise the weighted sum of pixels B03-B53. Any quarter-pixel values may be similarly generated, as needed, using a two-tap digital filter with inputs being an integer pixel value and the adjacent half-pixel value. For example, a quarter-pixel value between pixels A02 and A03 that is closer to pixel A02 would be the average of A02 and B00. Similarly, the quarter-pixel value between pixels A02 and A03 that is closer to pixel A03 would be the average of B00 and A03.

Importantly, the same hardware used for the encoding, i.e., the six-tap digital filter and various two-tap digital filters, can be used to generate any output needed for decoding, based on search space 70 as the input. Accordingly, the encoding techniques described herein are entirely consistent with a decoding scheme in which the same hardware can be used for both the encoding and the decoding.

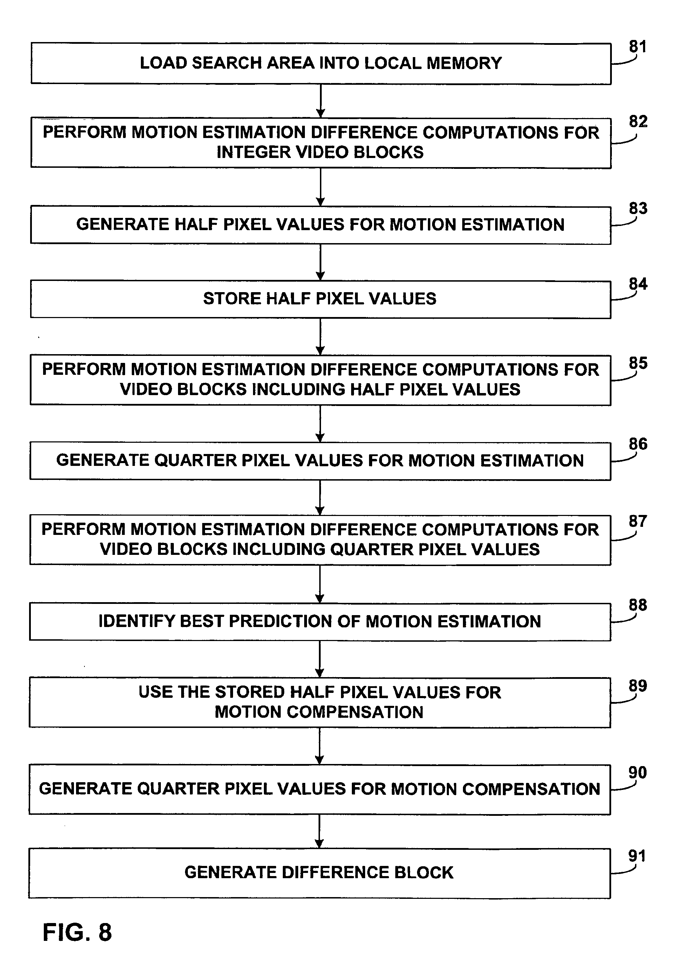

FIG 8 is a flow diagram illustrating a video encoding technique. For purposes of illustration, FIG 8 will be described from the perspective of device 12B of FIG 3. A video encoding technique may comprise all of the steps illustrated in FIG 8, or a subset of the illustrated steps. As shown in FIG 8, video encoder 18B loads a search area of integer pixels from video memory 16B to local memory 25B (81). Video block matching unit 34B can then immediately begin performing motion estimation difference computation for integer video blocks, i.e., video blocks having only integer pixel values (82). Meanwhile, six-tap digital filter 31 generates half-pixel values based on weighted sums of various subsets of integer pixels (83). Importantly, video encoder 18B stores the generated half-pixel values for use not only in motion estimation, but also subsequent motion compensation (84).

At this point, video block matching unit 34B can perform motion estimation difference computation for half-integer video blocks, i.e., any video blocks that include half-integer pixel values (85). Two-tap digital filter 33 generates quarter-pixel values, e.g., as the average of an integer pixel value and an adjacent half-pixel value (86). The quarter-pixel values can be used for motion estimation, but need not be stored for any subsequent use. Video block matching unit 34B can perform motion estimation difference computation for quarter-integer video blocks, i.e., any video blocks that include quarter-integer pixel values (87).

Once every candidate video block, including half-pixel blocks and quarter-pixel blocks have been compared to the current video block to be encoded, motion estimator 26B identifies a best prediction (88). However, as mentioned above, this disclosure also contemplates the use of an adequate match, which is not necessarily the "best" match, albeit a suitable match for effective video encoding and compression. Motion compensation is then performed.

During motion compensation, motion compensator 28B uses the half-pixel values generated by six-tap filter 31 and stored in local memory 25B (89). However, two-tap filter 37 generates any quarter-pixel values needed for motion compensation (90). In that case, two-tap filter 37 may re-generate at least some of the quarter-pixel values that were previously generated by two-tap digital filter 33. Difference block calculation unit 38A generates a difference block, e.g., indicative of the difference between the current video block to be encoded and the best prediction video block (91). The difference block can then be encoded and transmitted with a motion vector identifying the location of the candidate video block used for the video encoding.

A number of different embodiments have been described. The techniques may be capable of improving video encoding by achieving an efficient balance between local memory space and hardware used to perform non-integer pixel computations. In these and possibly other ways, the techniques can improve video encoding according to standards such as ITU H.264 or any other video encoding standards that use non-integer pixel values, including any of a wide variety of proprietary standards. In particular, the techniques are particularly useful whenever a video encoding standard calls for use of a three-tap filter or larger, in the generation of non-integer pixel values in a specific dimension. In other words, the techniques are particularly useful whenever a video encoding standard calls for use of a three-tap filter or larger for one-dimensional interpolation. The techniques may also be useful if a standard can be implemented using a five-tap filter or larger, in two-dimensional interpolation. The given standard being supported may specify the tap weights of the various filters.

The techniques may be implemented in hardware, software, firmware, or any combination thereof. If implemented in software, the techniques may be directed to a computer readable medium comprising program code, that when executed in a device that encodes video sequences, performs one or more of the methods mentioned above. In that case, the computer readable medium may comprise random access memory (RAM) such as synchronous dynamic random access memory (SDRAM), read-only memory (ROM), non-volatile random access memory (NVRAM), electrically erasable programmable read-only memory (EEPROM), FLASH memory, and the like.

The program code may be stored on memory in the form of computer readable instructions. In that case, a processor such as a DSP may execute instructions stored in memory in order to carry out one or more of the techniques described herein. In some cases, the techniques may be executed by a DSP that invokes various hardware components such as a motion estimator to accelerate the encoding process. In other cases, the video encoder may be implemented as a microprocessor, one or more application specific integrated circuits (ASICs), one or more field programmable gate arrays (FPGAs), or some other hardware-software combination. These and other embodiments are within the scope of the following claims.

**Claims**

1.    A video encoding device comprising:

> a motion estimator that generates non-integer pixel values for motion estimation, the motion estimator including a filter that receives at least three inputs of integer pixel values for one-dimensional interpolation;
> a memory that stores the non-integer pixel values generated by the motion estimator; and
> a motion compensator that uses the stored non-integer pixel values for motion compensation.

2.    The device of claim 1, wherein the non-integer pixel values comprise half-pixel values, and wherein:

> the motion estimator generates quarter-pixel values using the half-pixel values for the motion estimation without storing the quarter-pixel values for motion compensation; and
> the motion compensator re-generates the quarter-pixel values using the half-pixel values for the motion compensation.

3.    The device of claim 2, wherein:

> the motion estimator includes a six-tap filter to generate the half-pixel values for motion estimation and motion compensation, and a two-tap filter that generates the quarter-pixel values for motion estimation; and
> the motion compensator includes another two-tap filter to re-generate the quarter-pixel values for motion compensation.

4.    The device of claim 2, wherein:

> the motion estimator includes two six-tap filters to generate the half-pixel values for motion estimation and motion compensation for horizontal and vertical interpolation, and a two-tap filter that generates the quarter-pixel values for motion estimation for horizontal and vertical interpolation; and

the motion compensator includes another two-tap filters to re-generate the quarter-pixel values for motion compensation for horizontal and vertical interpolation.

5. The device of claim 4, wherein the device is compliant with an ITU H.264 video encoding standard and tap weights for the six-tap and two-tap filters are specified by the ITU H.264 video encoding standard.

6. The device of claim 1, wherein the motion estimator includes a second filter that generates additional non-integer pixel values for motion estimation based on the stored non-integer pixel values.

7. The device of claim 6, wherein the motion estimator generates the additional non-integer pixel values for motion estimation without storing the additional non-integer pixel values for motion compensation, and the motion compensator includes a third filter to re-generate the additional non-integer pixel values for motion compensation.

8. The device of claim 1, wherein the device performs the motion estimation and the motion compensation on four-pixel by four-pixel video blocks.

9. The device of claim 8, wherein the device performs the motion estimation and the motion compensation in a pipelined manner to generate motion vectors and difference matrices for video blocks larger than the four-pixel by four-pixel sub-video blocks.

10. The device of claim 1, wherein the device includes at least one of a digital television, a wireless communication devices, a personal digital assistant, a laptop computer, a desktop computer, a digital camera, a digital recording device, a cellular radiotelephone having video capabilities, and a satellite radiotelephone having video capabilities.

11. The device of claim 1, wherein the memory comprises a local on-chip memory, the device further comprising an off-chip video memory electrically coupled to the local on-chip memory via a bus.

12. The device of claim 1, further comprising a transmitter to transmit video frames encoded by the motion estimator and the motion compensator.

13. The device of claim 12, further comprising a video capture device to capture video frames in real-time, the motion estimator and the motion compensator being configured to encode the video frames in real-time and the transmitter being configured to transmit the encoded video frames in real-time.

14. The device of claim 1, wherein the generation of non-integer pixel values comprises a horizontal or vertical pixel interpolation.

15. A video encoding device comprising:

a first filter that receives at least three inputs of integer pixel values to generate non-integer pixel values for motion estimation and motion compensation;
a second filter that receives inputs of the non-integer pixel values to generate additional non-integer pixel values for the motion estimation; and
a third filter that receives inputs of the non-integer pixel values to generate additional non-integer pixel values for the motion compensation.

16. The device of claim 15, wherein:

the first filter comprises a six-tap filter that receives six inputs of integer pixel values to generate the non-integer pixel values for the motion estimation and the motion compensation;
the second filter comprises a two-tap filter that receives two inputs of the non-integer pixel values to generate the additional non-integer pixel values for the motion estimation; and
the third filter comprises a two-tap filter that receives two inputs of the non-integer pixel values to generate the additional non-integer pixel values for the motion compensation.

17. The device of claim 15, wherein the device is compliant with an ITU H.264 video encoding standard and tap weights for the six-tap and two-tap filters are specified by the ITU H.264 video encoding standard.

18. The device of claim 15, wherein the filters generate the non-integer pixel values for horizontal interpolation.

19. The device of claim 18, further comprising:

   another first filter comprising a six-tap filter that receives six inputs of integer pixel values to generate non-integer pixel values for the motion estimation and the motion compensation for vertical interpolation;
   another second filter comprising a two-tap filter that receives two inputs of the non-integer pixel values to generate the additional non-integer pixel values for the motion estimation for vertical interpolation; and
   another third filter comprising a two-tap filter that receives two inputs of the non-integer pixel values to generate the additional non-integer pixel values for the motion compensation for vertical interpolation.

20. A method of video encoding comprising:

   generating non-integer pixel values for motion estimation using a filter that receives at least three inputs of integer pixel values for horizontal or vertical interpolation;
   using the non-integer pixel values for motion estimation;
   storing the non-integer pixel values; and
   using the stored non-integer pixel values for motion compensation.

21. The method of claim 20, wherein the non-integer pixel values comprise half-pixel values, the method further comprising:

   generating quarter-pixel values for the motion estimation without storing the quarter-pixel values for motion compensation; and
   re-generating the quarter-pixel values for the motion compensation.

22. The method of claim 21, wherein:

   generating the half-pixel values comprises applying a six-tap filter; and
   generating the quarter-pixel values comprises applying a two-tap filter.

23. The method of claim 22, wherein the method is compliant with an ITU H.264 video encoding standard and tap weights for the six-tap and two-tap filters are specified by the ITU H.264 video encoding standard.

24. The method of claim 20, further comprising generating additional non-integer pixel values for motion estimation based on the stored non-integer pixel values.

25. The method of claim 24, further comprising generating the additional non-integer pixel values for motion estimation without storing the additional non-integer pixel values for motion compensation, and re-generating the additional non-integer pixel values for motion compensation.

26. The method of claim 20, further comprising performing the motion estimation and the motion compensation on four-pixel by four-pixel video blocks.

27. The method of claim 26, further comprising performing the motion estimation and the motion compensation in a pipelined manner to generate motion vectors and difference matrices for video blocks larger than the four-pixel by four-pixel sub-video blocks.

28. A computer readable medium comprising instructions that when executed:

   generates non-integer pixel values using a filter that receives at least three inputs of integer pixel values for horizontal or vertical interpolation;
   uses the non-integer pixel values for motion estimation;
   stores the non-integer pixel values; and
   uses the stored non-integer pixel values for motion compensation.

29. The computer readable medium of claim 28, wherein the non-integer pixel values comprise half-pixel values, the computer readable medium further comprising instructions that when executed:

generate quarter-pixel values for the motion estimation without storing the quarter-pixel values for motion compensation; and
re-generate the quarter-pixel values for the motion compensation.

30. The computer readable medium of claim 29, wherein the instructions when executed:

generate the half-pixel values by applying a six-tap filter; and
generate the quarter-pixel values by applying a two-tap filter.

31. The computer readable medium of claim 28, further comprising instructions that when executed perform the motion estimation and the motion compensation on four-pixel by four-pixel video blocks.

32. The computer readable medium of claim 31, further comprising instructions that when executed perform the motion estimation and the motion compensation in a pipelined manner to generate motion vectors and difference matrices for video blocks larger than the four-pixel by four-pixel sub-video blocks.

33. An apparatus comprising:

means for generating non-integer pixel values for motion estimation using at least three inputs of integer pixel values for vertical or horizontal interpolation;
means for using the non-integer pixel values in motion estimation;
means for storing the non-integer pixel values; and
means for using the stored non-integer pixel values for motion compensation.

34. The apparatus of claim 33, further comprising:

means for generating the non-integer pixel values for the motion estimation using six inputs of integer pixel values;
means for generating additional non-integer pixel values for the motion estimation using two inputs of stored non-integer pixel values; and
means for generating the additional non-integer pixel values for the motion compensation using two inputs of stored non-integer pixel values.

35. A video encoding device comprising:

a motion estimator that generates non-integer pixel values for motion estimation, the motion estimator including a filter that receives at least five inputs of integer pixel values for two-dimensional interpolation;
a memory that stores the non-integer pixel values generated by the motion estimator; and
a motion compensator that uses the stored non-integer pixel values for motion compensation.

10

12

14

**SOURCE DEVICE**

**RECEIVE DEVICE**

VIDEO
CAPTURE
DEVICE
23

VIDEO
MEMORY
16

DISPLAY
DEVICE
26

VIDEO
ENCODER
18

VIDEO
DECODER
24

TRANSMITTER
20

RECEIVER
22

15

**FIG. 1**

VIDEO ENCODER
18A

MOTION ESTIMATOR
26A

NON-INTEGER PIXEL
COMPUTATION UNIT(S)
32A

VIDEO BLOCK
MATCHING UNIT
34A

LOCAL
MEMORY
25A

MOTION COMPENSATOR
28A

NON-INTEGER PIXEL
COMPUTATION UNIT(S)
36A

DIFFERENCE BLOCK
CALCULATION UNIT
38A

39A

DIFFERENCE BLOCK
ENCODER

35A

VIDEO
CAPTURE
DEVICE
23A

VIDEO
MEMORY
16A

TRANSMITTER
20A

12A

**FIG. 2**

**12B**

**VIDEO ENCODER**
**18B**

**MOTION ESTIMATOR** — 26B

**SIX-TAP FILTER FOR HALF-PIXEL INTERPOLATION** — 31

**TWO-TAP FILTER FOR QUARTER-PIXEL INTERPOLATION** — 32B

33

**VIDEO BLOCK MATCHING UNIT** — 34B

**LOCAL MEMORY 25B**

**MOTION COMPENSATOR** — 28B

**TWO-TAP FILTER FOR QUARTER-PIXEL INTERPOLATION** — 36B

37

**DIFFERENCE BLOCK CALCULATION UNIT** — 38B

**DIFFERENCE BLOCK ENCODER** — 39B

35B

**VIDEO CAPTURE DEVICE 23B**

**VIDEO MEMORY 16B**

**TRANSMITTER 20B**

**FIG. 3**

FIG. 4

50

| A02 | B00 | A03 | B01 | A04 | B02 | A05 | B03 | A06 | B04 | A07 |
| A12 | B10 | A13 | B11 | A14 | B12 | A15 | B13 | A16 | B14 | A17 |
| A22 | B20 | A23 | B21 | A24 | B22 | A25 | B23 | A26 | B24 | A27 |
| A32 | B30 | A33 | B31 | A34 | B32 | A35 | B33 | A36 | B34 | A37 |
| A42 | B40 | A43 | B41 | A44 | B42 | A45 | B43 | A46 | B44 | A47 |
| A52 | B50 | A53 | B51 | A54 | B52 | A55 | B53 | A56 | B54 | A57 |
| A62 | B60 | A63 | B61 | A64 | B62 | A65 | B63 | A66 | B64 | A67 |
| A72 | B70 | A73 | B71 | A74 | B72 | A75 | B73 | A76 | B74 | A77 |
| A82 | B80 | A83 | B81 | A84 | B82 | A85 | B83 | A86 | B84 | A87 |
| A92 | B90 | A93 | B91 | A94 | B92 | A95 | B93 | A96 | B94 | A97 |

## FIG. 5

60 →

| A22 | B20 | A23 | B21 | A24 | B22 | A25 | B23 | A26 | B24 | A27 |
| C00 | C01 | C02 | C03 | C04 | C05 | C06 | C07 | C08 | C09 | C0A |
| A32 | B30 | A33 | B31 | A34 | B32 | A35 | B33 | A36 | B34 | A37 |
| C10 | C11 | C12 | C13 | C14 | C15 | C16 | C17 | C18 | C19 | C1A |
| A42 | B40 | A43 | B41 | A44 | B42 | A45 | B43 | A46 | B44 | A47 |
| C20 | C21 | C22 | C23 | C24 | C25 | C26 | C27 | C28 | C29 | C2A |
| A52 | B50 | A53 | B51 | A54 | B52 | A55 | B53 | A56 | B54 | A57 |
| C30 | C31 | C32 | C33 | C34 | C35 | C36 | C37 | C38 | C39 | C3A |
| A62 | B60 | A63 | B61 | A64 | B62 | A65 | B63 | A66 | B64 | A67 |
| C40 | C41 | C42 | C43 | C44 | C45 | C46 | C47 | C48 | C49 | C4A |
| A72 | B70 | A73 | B71 | A74 | B72 | A75 | B73 | A76 | B74 | A77 |

# FIG. 6

FIG. 7

```
┌─────────────────────────────────────────────────────────┐
│         LOAD SEARCH AREA INTO LOCAL MEMORY              │─ 81
└─────────────────────────────────────────────────────────┘
                          │
                          ▼
┌─────────────────────────────────────────────────────────┐
│   PERFORM MOTION ESTIMATION DIFFERENCE COMPUTATIONS FOR │─ 82
│               INTEGER VIDEO BLOCKS                      │
└─────────────────────────────────────────────────────────┘
                          │
                          ▼
┌─────────────────────────────────────────────────────────┐
│      GENERATE HALF PIXEL VALUES FOR MOTION ESTIMATION   │─ 83
└─────────────────────────────────────────────────────────┘
                          │
                          ▼
┌─────────────────────────────────────────────────────────┐
│                STORE HALF PIXEL VALUES                  │─ 84
└─────────────────────────────────────────────────────────┘
                          │
                          ▼
┌─────────────────────────────────────────────────────────┐
│   PERFORM MOTION ESTIMATION DIFFERENCE COMPUTATIONS FOR │─ 85
│          VIDEO BLOCKS INCLUDING HALF PIXEL VALUES       │
└─────────────────────────────────────────────────────────┘
                          │
                          ▼
┌─────────────────────────────────────────────────────────┐
│   GENERATE QUARTER PIXEL VALUES FOR MOTION ESTIMATION   │─ 86
└─────────────────────────────────────────────────────────┘
                          │
                          ▼
┌─────────────────────────────────────────────────────────┐
│   PERFORM MOTION ESTIMATION DIFFERENCE COMPUTATIONS FOR │─ 87
│        VIDEO BLOCKS INCLUDING QUARTER PIXEL VALUES      │
└─────────────────────────────────────────────────────────┘
                          │
                          ▼
┌─────────────────────────────────────────────────────────┐
│      IDENTIFY BEST PREDICTION OF MOTION ESTIMATION      │─ 88
└─────────────────────────────────────────────────────────┘
                          │
                          ▼
┌─────────────────────────────────────────────────────────┐
│          USE THE STORED HALF PIXEL VALUES FOR           │─ 89
│               MOTION COMPENSATION                       │
└─────────────────────────────────────────────────────────┘
                          │
                          ▼
┌─────────────────────────────────────────────────────────┐
│  GENERATE QUARTER PIXEL VALUES FOR MOTION COMPENSATION  │─ 90
└─────────────────────────────────────────────────────────┘
                          │
                          ▼
┌─────────────────────────────────────────────────────────┐
│               GENERATE DIFFERENCE BLOCK                 │─ 91
└─────────────────────────────────────────────────────────┘
```

**FIG. 8**

**European Patent Office**

**EUROPEAN SEARCH REPORT**

Application Number

EP 05 01 0885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 431 917 A (LSI LOGIC CORPORATION) 23 June 2004 (2004-06-23) * abstract * * paragraphs [0003] - [0009] * | 1-35 | H04N7/26 |
| X | TAMHANKAR A ET AL: "AN OVERVIEW OF H.264/MPEG-4 PART 10" PROCEEDINGS OF MULTIMEDIA COMMUNICATIONS, IOS PRESS, AMSTERDAM, NL, vol. 1, 2 July 2003 (2003-07-02), pages 1-51, XP008034260 | 15-19 | |
| A | * paragraph [04.3] * | 1-14, 20-35 | |

|  | TECHNICAL FIELDS SEARCHED (IPC) |
|---|---|
|  | H04N |

The present search report has been drawn up for all claims

| Place of search | Date of completion of the search | Examiner |
|---|---|---|
| The Hague | 2 March 2006 | Berbain, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 0885

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2006

| Patent document cited in search report | | Publication date | Patent family member(s) | | Publication date |
|---|---|---|---|---|---|
| EP 1431917 | A | 23-06-2004 | JP | 2004208320 A | 22-07-2004 |
| | | | US | 2004120401 A1 | 24-06-2004 |

EPO FORM P0459

For more details about this annex : see Official Journal of the European Patent Office, No. 12/82